# EUROPEAN PATENT APPLICATION

(11) **EP 4 570 482 A2**
(43) Date of publication of application: **18.06.2025**
(21) Application number: 24218244.2
(22) Date of filing: 09.12.2024
(51) Int. Cl.: B29D 30/06, B29C 35/04

(54) **ROTATING MIXING CHAMBER FOR TIRE CURATION AND METHOD**

(30) Priority: 14.12.2023 US 202363609942 P
(71) Applicant: The Goodyear Tire & Rubber Company, Akron, OH 44316 (US)
(72) Inventor: REX, William Allen, Doylestown, 44230 (US); MARINUCCI, Carmen, Boardman, Ohio, 44512 (US); NASCI, Makenzie Patrice, Copley, Ohio, 44321 (US)
(74) Representative: Kutsch, Bernd

(57) **Abstract**

Disclosed is a rotating mixing chamber apparatus for tire curation and a method of operating a tire mixing chamber apparatus for tire curation. The apparatus includes a curing bladder of a tire curing mold and a media distribution cap positioned in a center of the curing bladder. The media distribution cap has an inlet chamber to receive a gas in a plurality of distribution openings. The media distribution cap is configured to rotate about a center axis of the curing bladder when the gas enters the inlet. The gas is distributed into the curing bladder through the distribution openings.

## Description

### BACKGROUND

Tire manufacturing is a multiple step process that involves chemistry, physics, and engineering in order to meet certain tire performance characteristics. Each tire design can have a unique set of design parameters for achieving the desired performance characteristics. During the tire manufacturing process, curing is performed to give tires their final shape and tread pattern. In such a process, a preformed or green tire is placed inside of a mold. Within the mold, the preformed tire is expanded to press against the mold to form the tread pattern.

### SUMMARY OF THE INVENTION

The invention relates to an apparatus in accordance with claim 1 and to a method in accordance with claim 13.

Dependent claims refer to preferred embodiments of the invention.

A preformed tire may be positioned to surround the curing bladder while the curing bladder is configured to expand and press against an interior surface of the preformed tire. The method may comprise positioning a curing mold over the rotating tire mixing chamber assembly.

### BRIEF DESCRIPTION OF THE DRAWINGS

Many aspects of the present disclosure can be better understood with reference to the following drawings. The components in the drawings are not necessarily to scale, with emphasis instead being placed upon clearly illustrating the principles of the disclosure. Moreover, in the drawings, like reference numerals designate corresponding parts throughout the several views.
FIGS. 1A and 1B illustrate various views of vulcanization equipment that includes a tire curing press and mold and a mixing chamber assembly, according to one embodiment described herein.
FIG. 2 illustrates a perspective view of the mixing chamber assembly employed in the tire curing press and mold of FIG. 1, according to one embodiment described herein.
FIG. 3A illustrates a cross sectional view of the mixing chamber assembly of FIG. 2, according to one embodiment described herein.
FIG. 3B illustrates a cross sectional view of a base hub from FIG. 3A, according to one embodiment described herein.
FIGS. 4A and 4B are different views of a central support of the mixing chamber assembly of FIG. 2, according to one embodiment described herein.
FIGS. 5A-5C are different views of a media distribution cap of the mixing chamber assembly of FIG. 2, according to one embodiment described herein.
FIG. 6 is a perspective view of a gasket employed in the mixing chamber assembly of FIG. 2, according to one embodiment described herein.
FIG. 7A is a perspective view of a bearing from the mixing chamber assembly of FIG. 2, according to one embodiment described herein.
FIG. 7B is a perspective view of another bearing from the mixing chamber assembly of FIG. 2, according to one embodiment described herein.
FIG. 8 is a flowchart illustrating one example of a method for assembling and operating the tire mixing chamber assembly of FIG. 2 according to various embodiments of the present disclosure.

### DETAILED DESCRIPTION OF PREFERRED EMBODIMENTS

The embodiments of the present disclosure relate to a rotating mixing chamber assembly for purposes of curing tires. Tire manufacturing is a multiple step process. After the different components of a preformed or green tire have been assembled, one of the last steps of the tire manufacturing process involves curing the preformed or green tire into its final shape and tread pattern. A mold is positioned around the preformed tire. A rubber curing bladder is expanded from within the preformed tire to press the preformed tire against the mold. The rubber curing bladder is expanded by the injection of one or more gases. In some examples, some gas is preheated to an elevated temperature in order to raise the temperature of the preformed tire. In some embodiments, the gas is steam, nitrogen, a combination of gases, or other suitable gases. At the elevated temperature, the injection of certain gases increases the pressure of the preformed tire against the mold in order form the final shape and tread pattern.

Various embodiments of the present disclosure relate to various improvements for tire curation using a rotating mixing chamber assembly. Typically, during the curing process, the tire curing temperatures can vary at different tire locations within an expanded rubber curing bladder pressing a preformed tire against a mold. The temperature differences within the rubber curing bladder result in an uneven curing of the tire. In some instances, to compensate for the uneven curing, a longer curing time for the preformed tire may be specified. In other instances, the uneven curing may result in inferior performance characteristics or result in a great number of tire failures.

In some examples, the uneven temperatures occur from the use of wet steam to inflate and expand the rubber curing bladder. As the rubber curing bladder is inflated, the rubber curing bladder contacts and presses against an interior side of the preformed tire. While at an elevated temperature, the preformed tire is pressed against a tire mold apparatus in order to form the final shape and tread pattern of the tire. However, the wet steam and/or other gases cause condensation to occur and collect at the bottom of the rubber curing bladder. In some instances, a second gas injected to the curing bladder has a lower temperature than the steam. The mixture of the gases can also cause condensation. As a result, the collected condensation causes a lower temperature at the bottom areas of the rubber curing bladder.

Various embodiments of the rotating mixing chamber assembly are directed to improve the uneven temperatures occurring in the tire curing bladder during the curing process and other technical issues. For example, the embodiments of the rotating mixing chamber assembly improve the temperature variations by reducing the amount of condensation occurring within the rubber curing bladder. In some instances, the condensation is reduced by injecting gases into the rubber curing bladder at a variety of angles using a mixing chamber assembly that rotates within the curing bladder. The mixing chamber assembly rotates as gases are injected at various angles. The different angles of injection and the rotation of the injection points agitate or mix the contents (e.g., gas, condensation, and other materials) in the rubber curing bladder, which reduces the amount of condensation accumulated at the bottom of the rubber curing bladder or other suitable locations.

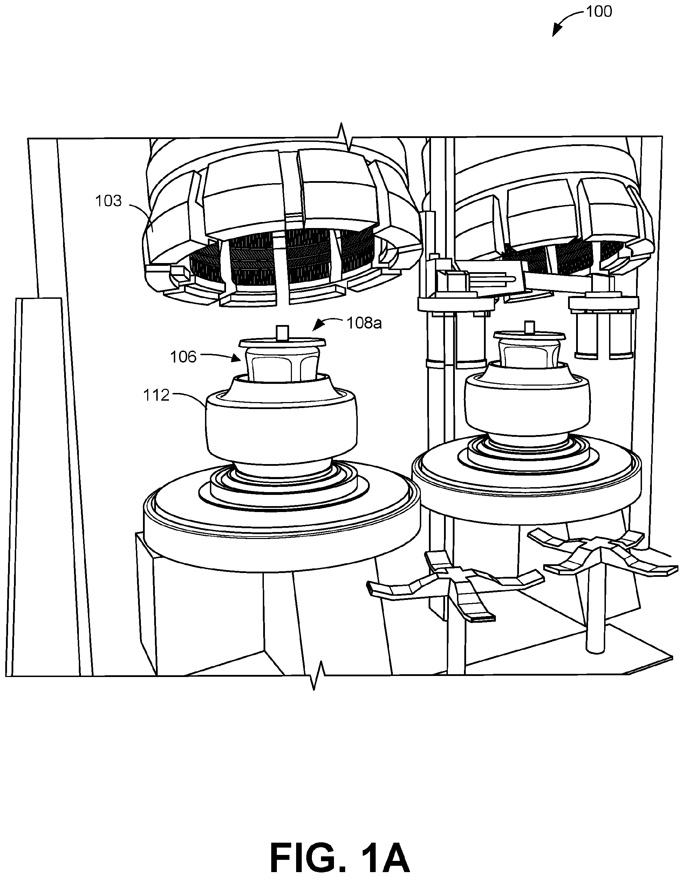

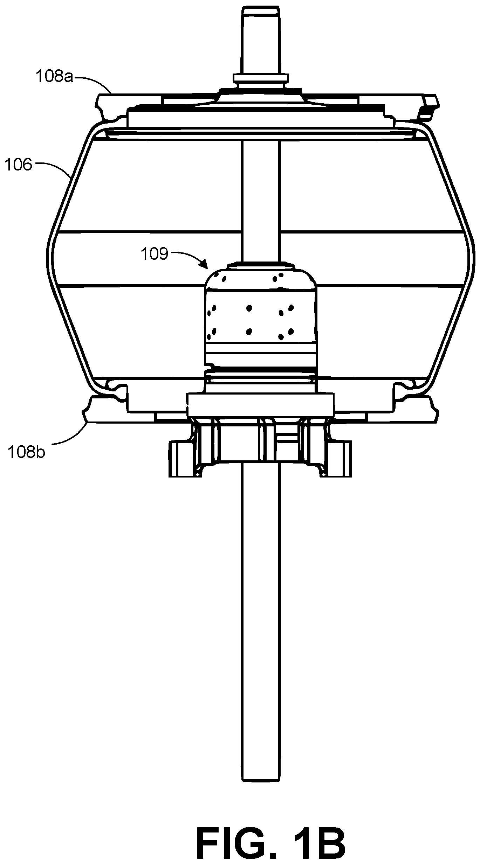

With reference to FIGS. 1A and 1B, shown is vulcanization equipment for curing automobile tires. FIG. 1A illustrates a tire curing press and mold apparatus 100 that includes a mold apparatus 103, a curing bladder 106, a top bladder mounting plate 108a, and other suitable components. FIG. 1B illustrates an enlarged view within the curing bladder 106. FIG. 1B illustrates that the tire curing press and mold apparatus 100 also includes a mixing chamber assembly 109.

In FIG. 1A, the curing bladder 106 is shown in a deflated state. After various components of the preformed or green tire 112 have been assembled, one of the last steps of the tire manufacturing process involves curing a preformed or green tire 112 into its final shape and tread pattern. The preformed tire 112 is placed on a structure and the mold apparatus 103 is lowered to surround the preformed tire 112. The curing bladder 106 is expanded within the preformed tire 112 to press the preformed tire 112 against the mold apparatus 103. The curing bladder 106 is expanded by injecting one or more gases (e.g., steam, nitrogen, etc.) into the curing bladder 106. Certain gases are heated to an appropriate curing temperature. As the pressure within the curing bladder 106 increases, the curing bladder 106 expands and the heated temperature of the gases facilitates the curing of the preformed tire 112 within the mold apparatus 103.

FIG. 1B illustrates the curing bladder 106 in an inflated state. FIG. 1B illustrates also that the curing bladder 106 is attached by a top bladder mounting plate 108a and a bottom bladder mount plate 108b. To cause the gas to inflate the curing bladder 106, a gas valve is opened to allow gas to enter a gas input port of the mixing chamber assembly 109. The mixing chamber assembly 109 provides for the injection of the gas into the curing bladder 106. As the gas is injected into the curing bladder 106, the mixing chamber assembly 109 rotates around a center axis to agitate condensation, existing gas, and other content in the curing bladder 106. As a result, condensation is stirred and/or heated, which will reduce the effect the condensation has on uneven curing temperatures at certain tire locations.

While in the inflated state, the preformed tire 112 is cured for a certain period of time due to the elevated temperature of the gas in the curing bladder 106 and pressure applied to the preformed tire 112 against the mold apparatus 103. In some examples, certain gases are preheated to an elevated temperature. As a result, preheated gas is injected into the curing bladder 106. The exterior surface of the curing bladder 106 contacts and elevates the temperature of the green rubber of the preformed tire 112 allowing the green rubber to flow into the mold and cure for a period of time. After the curing time period has expired, the curing bladder 106 is deflated. During an inflated state and/or during a deflating state, the mixing chamber assembly 109 drains the remaining condensation and other gaseous substances to a drainage channel.

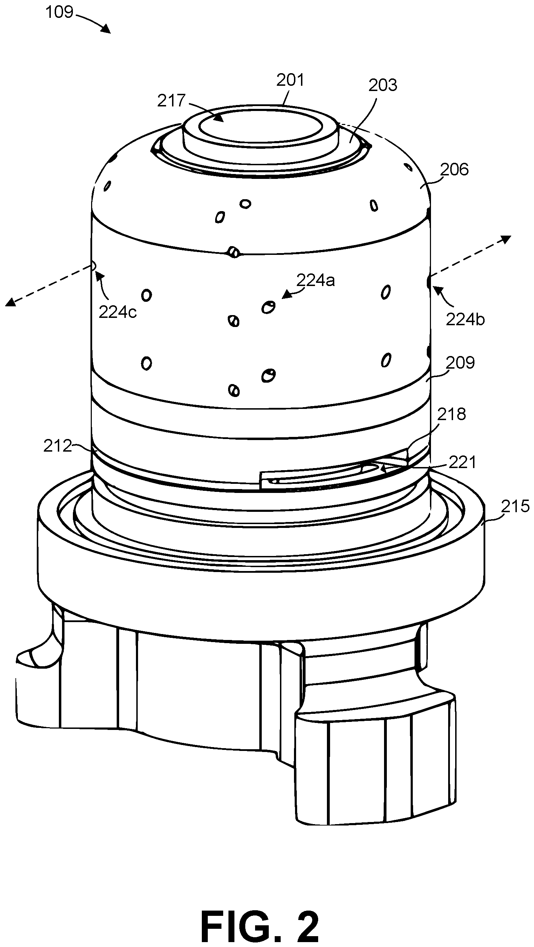

With reference to FIG. 2, shown is a perspective view of the mixing chamber assembly 109. The mixing chamber assembly 109 is configured to rotate as gas is injected into the curing bladder 106. The rotation causes the gas to be injected at varying locations within the curing bladder 106. As a result, the injected gas mixes or agitates the existing gas and/or condensation material within the curing bladder 106. The mixing or agitation reduces temperature variations between different locations within the curing bladder 106.

In one embodiment, the mixing chamber assembly 109 includes a central support 201, a first bearing 203, a media distribution cap 206, a second bearing 209, a gasket 212, and a base hub 215. The central support 201 is positioned within the media distribution cap 206. The central support 201 extends through a top opening of the media distribution cap 206. The central support 201 is positioned below a bottom portion of the media distribution cap 206 and the second bearing 209.

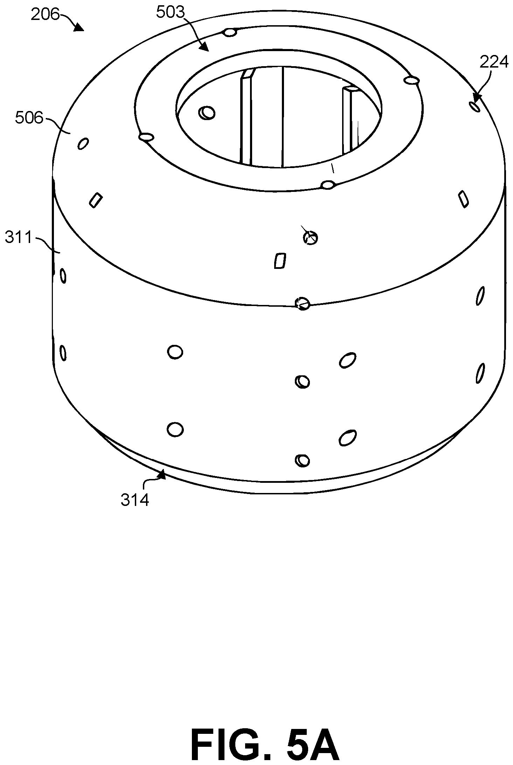

The first bearing 203 is positioned, for example, on top of the media distribution cap 206 around the first portion of the central support 201. In one embodiment, the first bearing 203 is positioned in a recessed area (see e.g., FIG. 5A (503)) on the top region of the media distribution cap 206. The first bearing 203 enables the media distribution cap 206 to rotate about the central support 201.

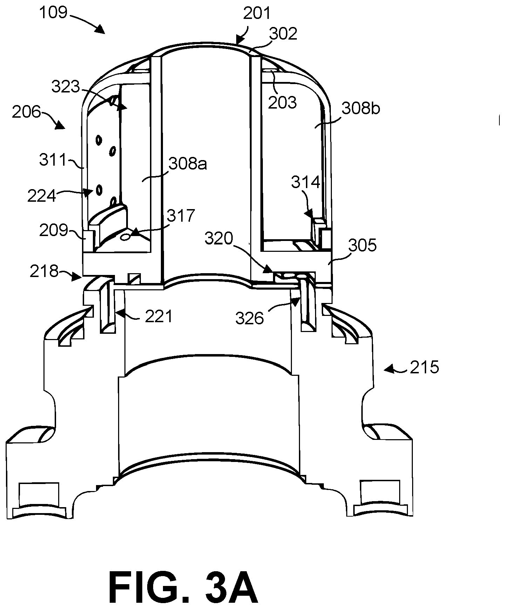

According to one embodiment, the bottom region of the media distribution cap 206 is positioned adjacent to the second bearing 209. The second bearing 209 is positioned above a portion of the central support 201 (see e.g., FIG. 3A). The second bearing 209 also facilitates the rotation of the media distribution cap 206 about the central support 201. A gasket 212 is positioned between the second portion of the central support 201 and the base hub 215.

The central support 201 is attached to the base hub 215 and is a support structure that supports other components in the mixing chamber assembly 109. The central support 201 has a central opening 217 for receiving a central rod. The central support 201 includes a drainage slot 218 that enables a drainage of gases, condensation, and the like in the curing bladder 106. The drainage slot 218 is in fluid connection with a drainage port 221 of the base hub 215.

The first bearing 203 facilitates the rotation of the media distribution cap 206 about the central support 201. The second bearing 209 also facilitates a rotation of the media distribution cap 206 about the central support 201. The first and second bearings 203 and 209 allow the media distribution cap 206 to rotate with minimum friction. In some embodiments, the first bearing 203 and/or second bearing 209 each include a layer of lubricant (e.g., oil or graphite) applied to a surface of the first bearing 203 and/or the second bearing 209. The first bearing 203 and/or the second bearing 209 is comprised of one or more materials, such as bronze, ceramic, sapphire, and other suitable metals. The first bearing 203 and/or the second bearing 209 may also be comprised of one or more plastic materials, such as nylon, polyoxymethylene, polytetrafluoroethylene, and other suitable plastic materials.

The media distribution cap 206 is a rotatable component that releases or injects gas into the curing bladder 106 (FIG. 1). As shown in FIG. 2, the media distribution cap 206 has a cylindrical bottom region that extends from a dome shaped region at an upper end of the media distribution cap 206. In one embodiment, the media distribution cap 206 includes multiple distribution openings 224a-c (e.g., a first distribution opening 224a, a second distribution opening 224b, a third distribution opening 224c, etc.). In one example embodiment, the distribution openings 224 are angled to direct the gases into the curing bladder 106 (FIGS. 1A and 1B) at various degrees. In some examples, the angle of the distribution openings 224 contribute to the rotation of the media distribution cap 206 as gas is injected into the curing bladder 106. In addition to being angled upward or downward, the angle of the distribution openings 224 can also be angled sideways.

As shown in FIG. 2, the second distribution opening 224b has a first upward orientation for directing gas in an upward direction and the third distribution opening 224c has a second downward orientation to direct gas in a downward direction. Accordingly, as the media distribution cap 206 rotates, gas is directed into the curing bladder 106 at various angles, thereby agitating or mixing the existing gas and condensing materials in the curing bladder 106 (FIG. 1).

The gasket 212 seals a seam between the base hub 215 and other components of the mixing chamber assembly 109. The gasket 212 thus prevents gases from leaking through gaps between mating surfaces or joints. The gasket 212 may comprise of one or more metals, one or more rubber materials (e.g., nitrile-butadiene rubber (NBR), styrene-butadiene rubber (SBR), neoprene and ethylene propylene diene monomer (EPDM) rubber, etc.), one or more plastic materials, and other suitable materials.

The mixing chamber assembly 109 is mounted onto the base hub 215. The base hub 215 includes a gas input port (not shown) and a drainage port 221. The gas input port enables incoming gas to enter the mixing chamber assembly 109. The gas input port is coupled to a gas valve (not shown) by way of a passage, where the gas valve regulates the flow of gases through the opening and into the media distribution cap 206. The drainage port 221 is for draining gas and condensation materials from the curing bladder 106 (FIG. 1). The drainage port 221 is opened and closed by a drainage valve in the base hub 215.

With reference to FIG. 3A, shown is a cross-section view of the mixing chamber assembly 109 according to various embodiments. FIG. 3A illustrates that the central support 201 includes a support extension 302 and a base flange 305. The media distribution cap 206 is positioned over the central support 201. The first bearing 203 surrounds the support extension 302 at one end of the support extension 302.

The media distribution cap 206 includes multiple baffles 308 (e.g., a first baffle 308a, a second baffle 308b, etc.) that extend from an inner surface 311 of the media distribution cap 206 toward the support extension 302 of the central support 201. Further, the media distribution cap 206 includes a second recessed annular area 314 that is configured to receive the second bearing 209.

The base flange 305 of the central support 201 includes multiple gas openings 317, a base chamber 320, a drainage slot 218, and other suitable components. In one embodiment, the mixing chamber assembly 109 includes multiple inlet chambers 323, in which each inlet chamber 323 is formed from portions of the base flange 305, a pair of the baffles 308, the inner surface 311 of the media distribution cap 206, and other suitable components. Upon entering the inlet chamber 323, the gas can be directed to be released through one of the distribution openings 224 accessible to the inlet chamber 323.

The base chamber 320 is on the bottom side of the base flange 305. The base chamber 320 is in fluid connection with a gas input port 326 of the base hub 215. The base chamber 320 is configured to receive a gas from the gas input port 326 and funnel the gas to multiple gas openings 317. The flow of gas to the gas input port 326 is regulated with a gas valve (not shown).

The drainage slot 218 is located on the bottom side of the base flange 305 and along a perimeter. The drainage slot 218 is in fluid connection with a drainage port 221. The drainage port 221 facilitates the flow of drainage by way of a drainage line. When the drainage valve is open, the drainage slot 218 facilitates the removal of gas, condensate, and other suitable materials from the curing bladder 106 through the drainage line.

With the curing bladder 106 attached (see e.g., FIG. 1B), the media distribution cap 206 rotates within the curing bladder 106 as gas is released into the curing bladder 106. As mentioned above, the gas is released at various angles from the media distribution cap 206. In some instances, portions of the gas are released at an upward trajectory and other portions of the gas are released at a downward trajectory. In one embodiment, the various distribution openings 224a-c (FIG. 3A) may be directed in random angles or directions such that gas enters the curing bladder 106 at random angles or directions. With the rotation of the media distribution cap 206, the different trajectories of the gas are injected into the curing bladder 106 in order to mix the gas and other materials (e.g., condensation) in the curing bladder 106.

In addition, the passageways through the wall of the media distribution cap 206 that make up the distribution openings 224a-c may be shaped as nozzles such as venturi nozzles or other types of nozzles. To accomplish the creation of such nozzles, the walls of the media distribution cap 206 may be thickened with additional material. Alternatively, nozzles may be attached to the media distribution cap 206 at the locations of the distribution openings 224a-c either inside or outside of the media distribution cap 206.

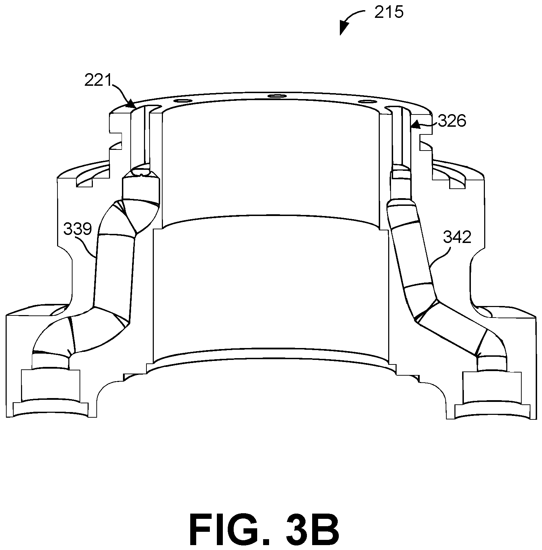

FIG. 3B illustrates an enlarged cross sectional view of the base hub 215. FIG. 3B illustrates a drainage channel 339 and an input channel 342. The drainage channel 339 is in fluid connection with the drainage port 221. As material is drained from the curing bladder 106 (FIG. 1B) into the drainage slot 218 (FIG. 3A) and the drainage port 221 (FIG. 3A), the material subsequently travels through the drainage channel 339. In some examples, a drainage valve (not shown) is positioned along the drainage channel 339, at an intersection of the drainage channel 339 and the drainage port 221, or at other suitable locations. The drainage valve is opened or closed to regulate when drainage occurs.

The input channel 342 is in fluid connection with the gas input port 326. Gas (e.g., stream, nitrogen, etc.) travels from the input channel 342 to the gas input port 326. Then, the gas can enter the mixing chamber assembly 109. In some examples, a gas valve (not shown) is positioned along the input channel 342, at an intersection of the input channel 342 and the gas input port 326, or at other suitable locations. The gas valve is opened or closed in order to regulate when gas enters the mixing chamber assembly 109.

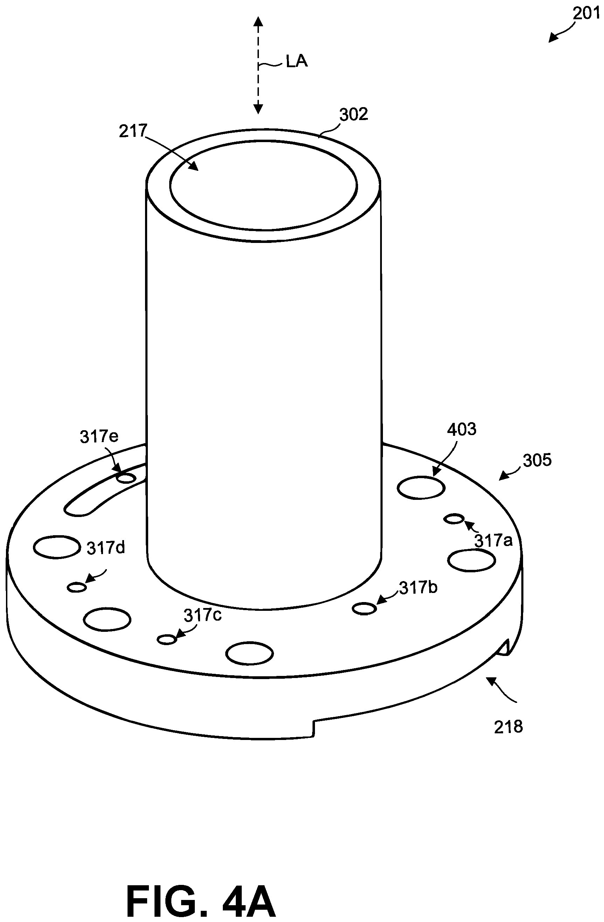

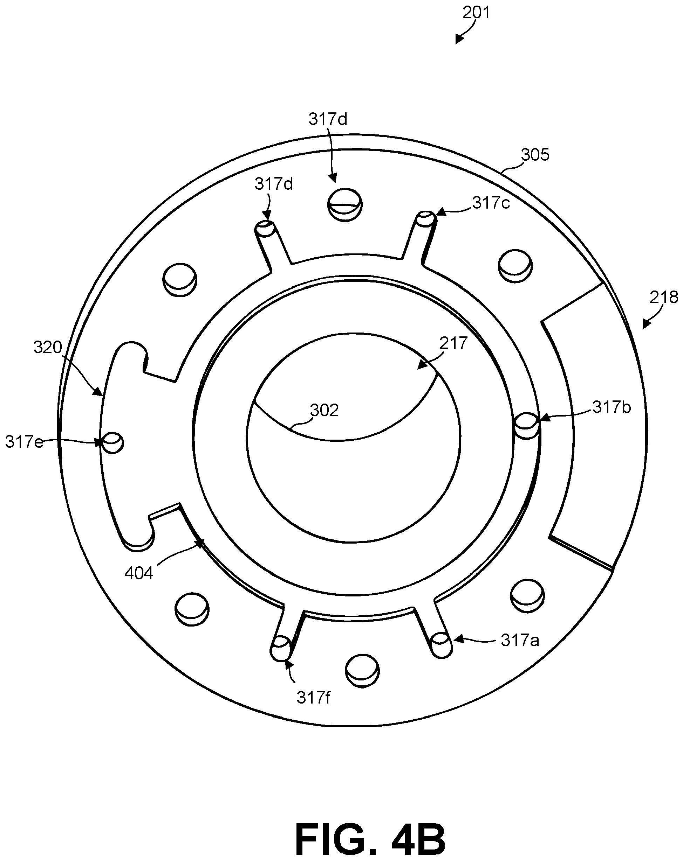

Next, FIGS. 4A and 4B illustrate different views of the central support 201. FIG. 4A illustrates a perspective view of the central support 201. As previously described, the central support 201 is a structural support component that is used to support other components of the mixed chamber assembly 109. In FIG. 4A, the central support 201 is shown to have the support extension 302 extending from the base flange 305. The support extension 302 has a cylindrical shape and a smaller diameter than the base flange 305. The support extension 302 has a longer length along a longitudinal axis LA of the central support 201 than the base flange 305. The support extension 302 has a central opening 217 that extends to the base flange 305.

In FIG. 4A, the base flange 305 has multiple gas openings 317a-e and mount openings 403 on a top surface. The gas openings 317 establish a pathway from the base chamber 320 (FIG. 4B) to the media distribution cap 206 (FIG. 3A). In this non-limiting example, the fifth gas opening 317e is directly above the base chamber 320. The mount openings 403 are positioned along the perimeter. The mount openings 403 facilitate the attachment of the base flange 305 to the base hub 215 (FIG. 3A). To this end, the mount openings 403 receive a fastener (e.g., a threaded screw, a bolt, etc.) for attaching the base flange 305 to the base hub 215. Additionally, the base flange 305 has a drainage slot 218 along the perimeter.

FIG. 4B illustrates a bottom side view of the base flange 305 of the central support 201. The base flange 305 has a central opening 217 that extends through the support extension 302. In FIG. 4B, the base chamber 320 has an arcuate shape, but the shape of the base chamber 320 can vary. The base chamber 320 extends to a gas channel network 404. In one embodiment, the gas channel network 404 extends from the base chamber 320 and travels around the central opening 217. The gas channel network 404 includes multiple channels that individually connect to one of the gas openings 317a-e. As a result, in some examples, gas rises from below and enters the base chamber 320. From the base chamber 320, the gas travels through the gas channel network 404 and is routed into one or more gas openings 317 and then into the media distribution cap 206 (FIG. 3A). The central support 201 has the base chamber 320 located along a first perimeter location of the central support 201, and the drainage slot 218 is located along a second perimeter location of the central support 201.

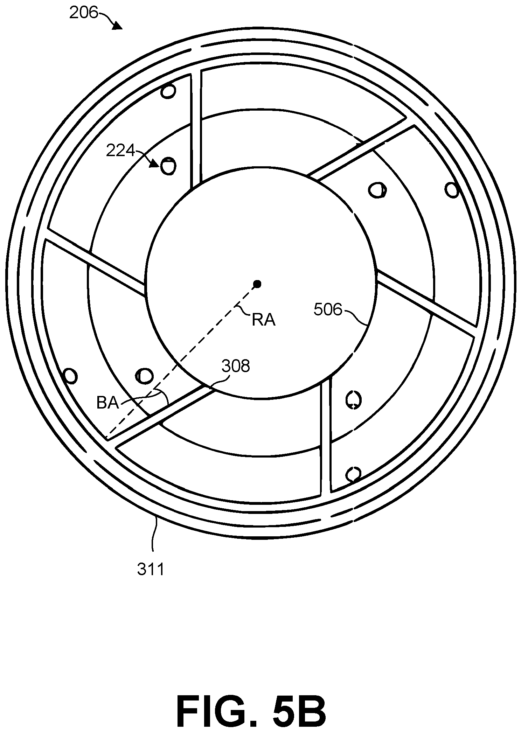

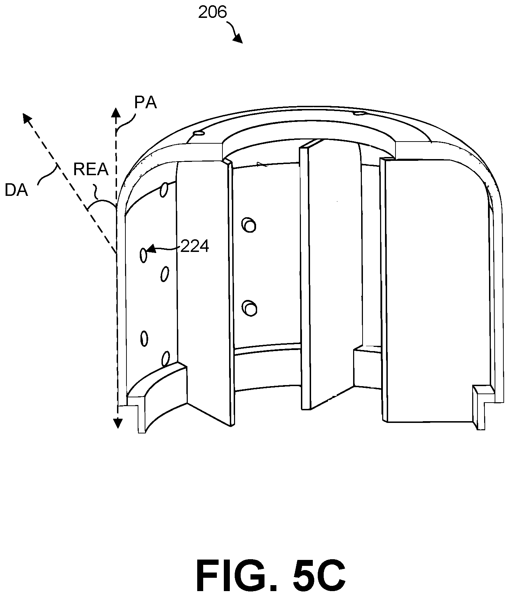

FIGS. 5A, 5B, and 5C illustrate different views of the media distribution cap 206. FIG. 5A illustrates a perspective view of the media distribution cap 206. The media distribution cap 206 includes a first recessed annular area 503, a top cap region (FIG. 5 (506)), an inner surface 311, a second recessed annular area 314 and other suitable components. The first recessed annular area 503 is recessed within the top cap region 506 toward a center point of the media distribution cap 206 and surrounds a first opening of the media distribution cap 206. In one embodiment, the first recessed annular area 503 is at a top area of the media distribution cap 206 and is configured to receive and support the first bearing 203. The first bearing 203 (FIG. 2) enables the media distribution cap 206 to rotate. In some examples, the top cap region 506 has a dome-shape or other suitable shapes that can accommodate the first bearing 203. The inner surface 311 has a cylindrical shape and has multiple distribution openings 224. The second recessed annular area 314 is located at a bottom region of the media distribution cap 206.

FIG. 5B illustrates a bottom view of the media distribution cap 206. Although FIG. 5B illustrates six baffles 308, the number of baffles 308 may be other than six. The baffle angle BA represents an angle between a radial axis RA and the baffle 308. The baffle angle BA can vary as well. The radial axis RA extends from the inner surface 311 to a center point of the media distribution cap 206. Once gas enters an interior chamber, the baffle angle BA is designed to improve or speed up the release of the gas out of the distribution openings 224 and into the curing bladder 106. The baffles 308 are designed to distribute the gas from the gas openings 317 among various inlet chambers 323.

FIG. 5C illustrates a cross sectional view of the media distribution cap 206. FIG. 5C illustrates a directional array DA for a gas being released out of a distribution opening 224. A release angle REA of the distribution opening 224 can represent the angle between the directional array DA and an axis PA that is parallel to the longitudinal axis LA (see e.g., FIG. 4A) of the mixing chamber assembly 109. In some examples, the release angle REA is set in order to release or inject the gas at a downward direction or an upward direction. The various angles of injection for the gases cause a mixture of the gas in the curing bladder 106. In some examples, the release angle REA is in a range of 1-89 degrees or 91-180 degrees. For example, in some preferred embodiments, the release angle RA is at 45 degrees or 135 degrees. Additionally, the directional array DA of a distribution opening 224 can be designed to release the gas at an angle in order to facilitate the rotation of the media distribution cap 206 as gas is released through the distribution opening 224.

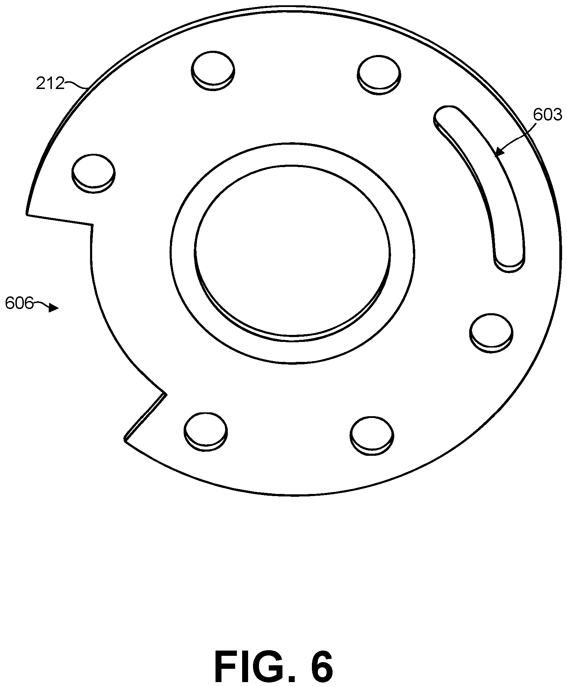

FIG. 6 illustrates a perspective view of the gasket 212. The gasket 212 includes a slot 603 and a cutaway 606 along a perimeter of the gasket 212. The slot 603 is positioned above the gas input port 326 of the base hub 215 to provide for a passageway between the base chamber 320 and the gas input port 326. Thus, gas flows from the gas input port 326 through the gasket 212 and to the base chamber 320.

The cutaway 606 is positioned to correspond to the drainage port 221 of the central support 201. The cutaway 606 facilitates a passageway for drainage material in the curing bladder 106 to travel from the drainage slot 218 to a drainage line in the base hub. Thus, the gasket 212 provides a seal between the bottom of the central support 201 and the base hub 215 in all other areas.

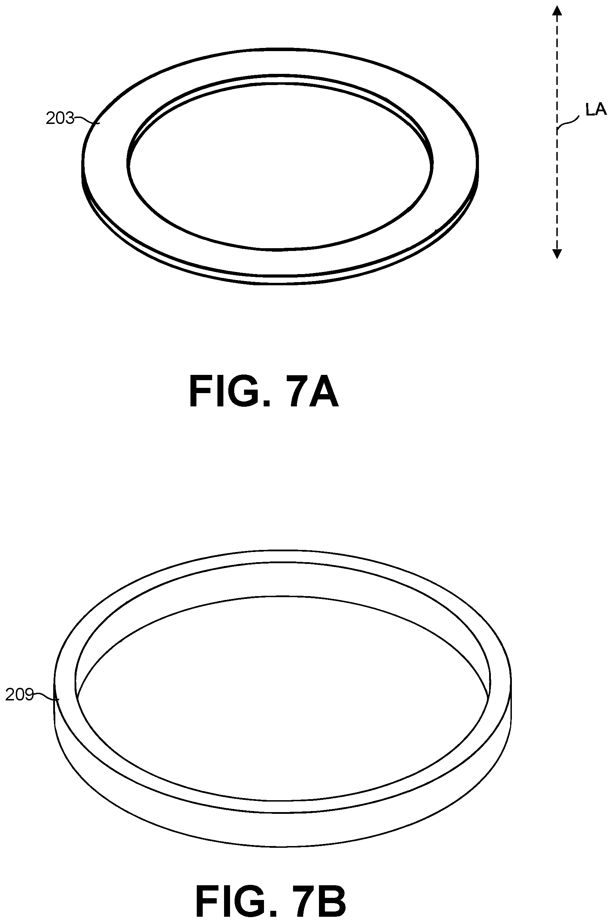

FIG. 7A illustrates a perspective view of the first bearing 203. FIG. 7B illustrates a perspective view of the second bearing 209. FIG. 7B illustrates a perspective view of the second bearing 209. In one embodiment, the first bearing 203 has a thicker top surface than the second bearing 209. The top surface area represents a difference in a top surface distance from an outer perimeter to an inner perimeter. The second bearing 209 has a larger height than the first bearing 203 in a direction parallel to the longitudinal axis LA.

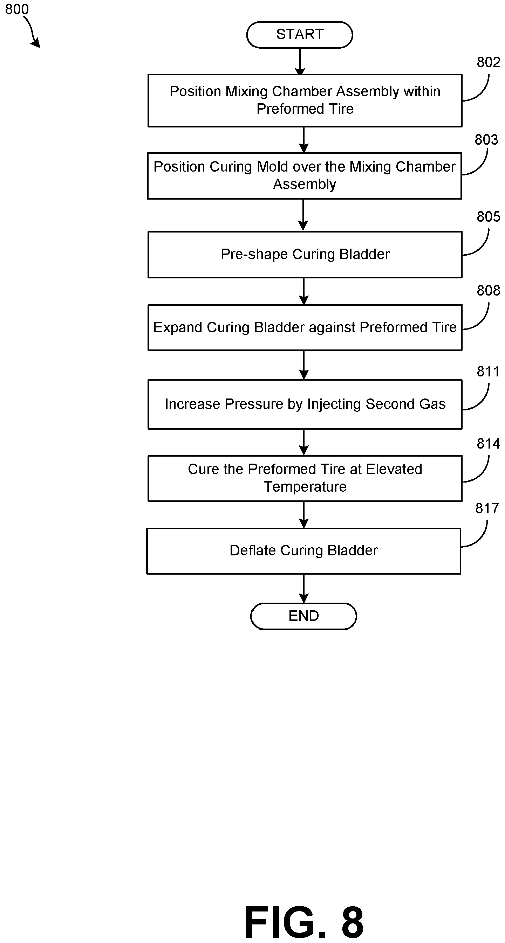

Referring next to FIG. 8, shown is a flowchart that provides an example method 800 of operating the mixing chamber assembly 109 according to various embodiments. It is understood that the flowchart of FIG. 8 provides merely an example of a method of operating the mixing chamber assembly 109.

Beginning with block 802, the method 800 includes positioning a mixing chamber assembly 109 (FIG. 2) within the center of a preformed tire 112 (FIG. 1A). The mixing chamber assembly 109 has a curing bladder 106 (FIG. 1B) attached. The curing bladder 106 is attached at a first attachment point (FIG. 1B) with a top bladder mounting plate 108a and is attached at a second attachment point (FIG. 1B) with a bottom bladder mounting plate 108b. In one embodiment, the mixing chamber assembly 109 is moved into position by an actuator or a robotic mechanism.

In block 803, the method 800 includes positioning a mold apparatus 103 over the mixing chamber assembly 109. For example, the mold apparatus 103 is lowered down over the mixing chamber assembly 109, the preformed tire 112, and the curing bladder 106. The mold apparatus 103 is positioned to surround the curing bladder 106 and the preformed tire 112.

In block 805, the method 800 includes pre-shaping the curing bladder 106 by providing a first portion of gas (e.g., steam) through the mixing chamber assembly 109. The first portion of steam is provided at a pressure that is less than a first pressure threshold. In some examples, the first pressure threshold is less than 69000 Pa (10 PSI). In some preferred embodiments, the first pressure threshold is 34400 to 41400 Pa (5-6 PSI). Further, in some examples the gas is preheated to an elevated temperature. For example, the elevated temperature can be in a temperate range of 160 degrees to 220 degree Celsius. In some preferred embodiments, the elevated temperature is 180 degrees Celsius.

As gas is injected into the curing bladder 106 through the media distribution cap 206, the media distribution cap 206 rotates about the support extension 302 of the central support 201. The first bearing 203 and the second bearing 209 reduce the friction with the media distribution cap 206 in order to improve the ability of the media distribution cap 206 to rotate.

In some examples, the mixing chamber assembly 109 releases or injects gas into the curing bladder 106 by one or more fluid paths in the mixing chamber assembly 109. For instance, a gas valve is opened to allow for gas to travel from a gas line into the gas input port 326 and subsequently into the base chamber 320. From the base chamber 320, the gas travels to the gas channel network 404 and to one of the gas openings 317. From the gas openings 317, the gas is released into an inlet chamber 323 and through one of the distribution openings 224 approximate to the inlet chamber 323. Upon exiting the distribution opening 224, the gas is directed in a downward or upward trajectory into the curing bladder 106, in which the angles of injection can vary. The various directions or trajectories of the gas injection is used to mix or agitate the contents (e.g., the gas, condensation, and other materials) in the curing bladder 106. This mixture or agitation reduces temperature variations that may occur because the contents is stirred and/or heated. Because of the mixture or agitation, the gas, condensation, and other materials cannot stay settled as long in the curing bladder 106, which previously would cause a reduction in a temperature.

In one embodiment, a controller (e.g., a computing device) controls the opening and closing of the gas valve and the drainage valve. The controller includes, for example, a computing device that comprises a processor and memory. The memory stores machine-executable instructions, and the machine-executable instructions can be executed to control a process for curing tires with the mixing chamber assembly 109.

The mixing chamber assembly 109 rotates the media distribution cap 206 as the first portion of steam is injected into the curing bladder 106. While the media distribution cap 206 is rotating, the first portion of steam is injected at upward, downward, and other suitable angles in order to mix the gas, the condensation, and other material in the curing bladder 106.

In block 808, the method 800 include expanding the curing bladder 106 against the preformed tire 112 by providing at second portion of gas (e.g., steam) into the curing bladder 106. In some examples, the second portion of gas can be preheated to a certain temperature or temperature range. The second portion of gas is provided in order to increase the pressure to at least a second threshold. In some examples, the second threshold is in a pressure range of 175 to 250 pounds per square inch (PSI), which corresponds to 1.2 MPa to 1.73 MPa. In some preferred embodiments, the second threshold is 200 PSI or 1.38 MPa. At this point, in some instances, the pressure within the curing bladder 106 is held within a range of the second threshold for a predetermined period of time.

In block 811, the method 800 includes increasing the pressure of the curing bladder 102 to a third pressure threshold by injecting a second gas. In some examples, the second gas is nitrogen or other suitable gases, and the third pressure threshold is in a range of 280 to 320 PSI or 1.9 MPa to 2.21 MPa. The second gas (e.g., nitrogen) is added in order to increase the pressure within the curing bladder 106. In some examples, the second gas is used to further increase the because the second gas is better suited for achieving higher pressure thresholds than the first gas. The increased pressure within the curing bladder 106 presses the preformed tire 112 into the mold apparatus 103. In some preferred embodiments, the second gas is added to reach 300 PSI or 2.07 MPa. In some instances, the second gas does not increase the tire temperature. Instead, the second gas causes condensation because the second gas (e.g., nitrogen) may be injected at a lower temperature than the first gas (e.g., preheated steam). As a result, the condensation may cause uneven temperatures at certain tire locations (e.g., near a bottom side wall).

In block 814, the method 800 includes curing the preformed tire at the elevated temperature and the third pressure threshold for a period of time. The period of time can be a predefined period of time and the predefined period of time may vary based at least in part on certain design specifications.

In block 817, the method 800 includes deflating the curing bladder 106. The deflating of curing bladder 106 occurs by one or more drainage paths. In some examples, a drainage process includes first opening a drainage valve in the base hub 215. The drainage valve is connected to a drainage port 221, which is in fluid connection with the drainage slot 218. As a result, upon opening the drainage valve, gas, condensation, and other materials are drained through the drainage slot 218, through the drainage port 221 and to a drainage channel 339. Then, the method 800 proceeds to the end.

In addition to the forgoing, the various embodiments of the present disclosure include, but are not limited to, the embodiments set forth in the following clauses.

Embodiment 1 is an apparatus, comprising: a curing bladder of a tire curing mold; a media distribution cap positioned in a center of the curing bladder; the media distribution cap having an inlet chamber to receive a gas and a plurality of distribution openings; and the media distribution cap configured to rotate about a center axis of the curing bladder when the gas enters the inlet, the gas being distributed into the curing bladder through the distribution openings.

Embodiment 2 is an apparatus as set forth in embodiment 1, further comprising: a central support that includes a base flange and a support extension, the media distribution cap being placed over the central support.

Embodiment 3 is an apparatus as set forth in embodiment 2, wherein the base flange includes a base chamber that is configured to route the gas to the inlet chamber.

Embodiment 4 is an apparatus as set forth in any one of embodiments 1 or 2, further comprising: a central support that is positioned below the media distribution cap; and a base hub that is attached to the central support, the base hub comprising a gas input port for directing the gas to the central support.

Embodiment 5 is an apparatus as set forth in any one of embodiments 1, 2, or 4, wherein the media distribution cap comprises a baffle that extends from an inner surface of the media distribution cap.

Embodiment 6 is an apparatus as set forth in any one of embodiments 1, 2, 4, or 5, wherein the media distribution cap includes a first recessed annular area that facilitates the rotation of the media distribution cap, the first recessed annular area surrounding a first opening of the media distribution cap.

Embodiment 7 is an apparatus as set forth in any one of embodiments 1, 2, or 4 through 6, further comprising: a first bearing that is configured to be positioned in a first recessed annular area of the media distribution cap.

Embodiment 8 is an apparatus as set forth in any one of embodiments 1, 2, or 4 through 7, wherein the media distribution cap includes a first recessed annular area and a second recessed annular area, the first recessed annular area being situated at a top area of the media distribution cap and the second recessed annular area being situated at a bottom area of the media distribution.

Embodiment 9 is an apparatus as set forth in any one of embodiments 1, 2, or 4 through 8, wherein the plurality of distribution openings of the media distribution cap having an angled perimeter for distributing the gas into the curing bladder.

Embodiment 10 is an apparatus as set forth in any one of embodiments 1, 2, or 4 through 9, further comprising: a central support that includes a base chamber and a drainage slot, the base chamber being located along a first perimeter of the central support and the drainage slot being located along a second perimeter location of the central support.

Embodiment 11 is an apparatus as set forth in any one of embodiments 1, 2, or 4 through 10, further comprising: a central support that has a support extension for supporting the media distribution cap; a base hub that is attached to the central support, the base hub having a second attachment point to the curing bladder.

Embodiment 12 is an apparatus as set forth in any one of embodiments 1, 2, or 4 through 11, further comprising: a central support that includes a base chamber; a base hub; and a gasket that is positioned between the base hub and the central support, the gasket having a slot for permitting a flow of the gas from the base hub to the base chamber.

Embodiment 13 is an apparatus as set forth in any one of embodiments 1, 2, or 4 through 12, further comprising: a preformed tire that is positioned to surround the curing bladder, the curing bladder being configured to expand and press against an interior surface of the preformed tire.

Embodiment 14 is an apparatus as set forth in any one of embodiments 1, 2, or 4 through 13, further comprising: a central support that has a base chamber and a network of channels that extend from the base chamber to the inlet chamber, the network of channels being extended around a central opening of the central support.

Embodiment 15 is an apparatus as set forth in any one of embodiments 1, 2, or 4 through 14, wherein the media distribution cap comprises a dome shape for a top region.

Embodiment 16 is a method of operating a tire mixing chamber apparatus for tire curation, comprising: positioning a rotating tire mixing chamber assembly within a preformed tire, the rotating tire mixing chamber assembly having a curing bladder attached; pre-shaping tire curing bladder by providing a first portion of steam through the rotating tire mixing chamber, the first portion of steam is provided at a pressure that is less than a first pressure threshold, a media distribution cap of the rotating tire mixing chamber rotates as the first portion of the steam is provided to the tire curing bladder; expanding the tire curing bladder to press against an interior of the preformed tire by increasing the pressure to at least a second pressure threshold with a second portion of steam, the second portion of steam causing an elevated temperature at the preformed tire; increasing the pressure to a third pressure threshold by providing nitrogen to the tire curing bladder through the rotating tire mixing chamber; curing the preformed tire at the elevated temperature for a set period of time in order to generate a formed tire.

Embodiment 17 is a method of embodiment 16, wherein the second pressure threshold is in a range of 175 to 225 PSI or 1.20 MPa to 1.55 MPa.

Embodiment 18 is a method as set forth in any one of embodiments 16 or 17, further comprising: opening a drain valve at the rotating tire mixing chamber assembly, the drain valve being in fluid connection with a drainage slot in the rotating tire mixing chamber assembly, the drainage slot draining a remaining material in the tire cure bladder.

Embodiment 19 is a method as set forth in any one of embodiments 16 through 18, further comprising: positioning a curing mold over the rotating tire mixing chamber assembly.

Embodiment 20 is a method as set forth in any one of embodiments 16 through 19, further comprising: deflating the curing bladder by opening a drainage valve in a base hub of the rotating tire mixing chamber assembly.

## Claims

1. An apparatus comprising a curing bladder of a tire curing mold and a media distribution cap positioned in a center of the curing bladder, the media distribution cap having an inlet chamber to receive a gas and a plurality of distribution openings, wherein the media distribution cap is configured to rotate about a center axis of the curing bladder when the gas enters the inlet chamber, the gas being distributed into the curing bladder through the distribution openings.

2. The apparatus of claim 1, further comprising a central support that includes a base flange and a support extension, the media distribution cap being placed over the central support, and, optionally, wherein the base flange includes a base chamber that is configured to route the gas to the inlet chamber.

3. The apparatus of claim 1 or 2, further comprising a central support that is positioned below the media distribution cap; and a base hub that is attached to the central support, the base hub comprising a gas input port for directing the gas to the central support.

4. The apparatus of at least one of the previous claims, wherein the media distribution cap comprises a baffle that extends from an inner surface of the media distribution cap; and/or wherein the media distribution cap includes a first recessed annular area that facilitates the rotation of the media distribution cap, the first recessed annular area surrounding a first opening of the media distribution cap.

5. The apparatus of at least one of the previous claims, further comprising a first bearing that is configured to be positioned in a first recessed annular area of the media distribution cap.

6. The apparatus of at least one of the previous claims, wherein the media distribution cap includes a first recessed annular area and a second recessed annular area, the first recessed annular area being situated at a top area of the media distribution cap and the second recessed annular area being situated at a bottom area of the media distribution cap.

7. The apparatus of at least one of the previous claims, wherein the plurality of distribution openings of the media distribution cap have an angled perimeter for distributing the gas into the curing bladder.

8. The apparatus of at least one of the previous claims, further comprising a central support that includes a base chamber and a drainage slot, the base chamber being located along a first perimeter location of the central support and the drainage slot being located along a second perimeter location of the central support.

9. The apparatus of at least one of the previous claims, further comprising a central support that has a support extension for supporting the media distribution cap; and a base hub that is attached to the central support, the base hub having a second attachment point to the curing bladder.

10. The apparatus of at least one of the previous claims, further comprising a central support that includes a base chamber; a base hub; and a gasket that is positioned between the base hub and the central support, the gasket having a slot for permitting a flow of the gas from the base hub to the base chamber.

11. The apparatus of at least one of the previous claims, further comprising a central support that has a base chamber and a network of channels that extend from the base chamber to the inlet chamber, the network of channels being extended around a central opening of the central support.

12. The apparatus of at least one of the previous claims, wherein the media distribution cap comprises a dome shape for a top region.

13. A method of operating a tire mixing chamber apparatus for tire curation, the method comprising:
positioning a rotating tire mixing chamber assembly within a preformed tire, the rotating tire mixing chamber assembly having a curing bladder attached;
pre-shaping the curing bladder by providing a first portion of steam through the rotating tire mixing chamber assembly, the first portion of steam is provided at a pressure that is less than a first pressure threshold, a media distribution cap of the rotating tire mixing chamber assembly rotates as the first portion of the steam is provided to the curing bladder;
expanding the curing bladder to press against an interior of the preformed tire by increasing the pressure to at least a second pressure threshold with a second portion of steam, the second portion of steam causing an elevated temperature at the preformed tire;
increasing the pressure to a third pressure threshold by providing nitrogen to the curing bladder through the rotating tire mixing chamber assembly; and
curing the preformed tire at the elevated temperature for a set period of time in order to generate a formed tire.

14. The method of claim 13, wherein the second pressure threshold is in a range of from 1.2 MPa to 1.55 MPa.

15. The method of claim 13 or 14, further comprising opening a drainage valve at the rotating tire mixing chamber assembly, the drainage valve being in fluid connection with a drainage slot in the rotating tire mixing chamber assembly, the drainage slot draining a remaining material in the tire cure bladder; and/or further comprising deflating the curing bladder by opening a drainage valve in a base hub of the rotating tire mixing chamber assembly.
